# EUROPEAN PATENT APPLICATION

(11) **EP 4 608 020 A1**
(43) Date of publication of application: **27.08.2025**
(21) Application number: 23922455.3
(22) Date of filing: 05.12.2023
(51) Int. Cl.: H04W 52/02

(54) **WAKE-UP SIGNAL MONITORING METHOD, WAKE-UP SIGNAL SENDING METHOD, COMMUNICATION NODE, AND STORAGE MEDIUM**

(30) Priority: 17.02.2023 CN 202310154066
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); HU, Youjun, Shenzhen, Guangdong 518057 (CN); CHEN, Mengzhu, Shenzhen, Guangdong 518057 (CN)
(74) Representative: Aipex B.V.
(86) International application number: PCT/CN2023/136347
(87) International publication number: WO 2024/169339

(57) **Abstract**

Provided are a wake-up signal monitoring method, a wake-up signal sending method, a communication node, and a storage medium. The wake-up signal monitoring method includes: determining a monitoring window; monitoring a wake-up signal in the monitoring window; and determining transmission of the first communication node according to a monitoring result of the wake-up signal.

## Description

### TECHNICAL FIELD

The present application relates to the field of communication technology, for example, a wake-up signal monitoring method, a wake-up signal sending method, a communication node, and a storage medium.

### BACKGROUND

As wireless communication technologies continue to evolve, high-speed and low-latency wireless communication relies on efficient network resource management and allocation between a user equipment and an access network device. New-generation wireless communication networks are expected to provide high-speed, low-latency, and ultra-reliable communication capabilities to meet the needs of different industries and users. Based on this, in order to meet the battery life requirement, it is considered to introduce an ultra-low-power wake-up mechanism for the user equipment. That is, the user equipment uses an individual receiver or a specific receiving module to receive a low-power wake-up signal, and data transmission is performed through waking up a primary receiver or a primary module by using the low-power wake-up signal. When the user equipment monitors no low-power wake-up signal, the primary receiver or the primary module is in a deep sleep state, thereby further reducing power consumption of the user equipment. However, currently, there is no specific solution for how a user equipment can receive low-power wake-up signals.

### SUMMARY

An embodiment of the present application provides a wake-up signal monitoring method. The method is applied to a first communication mode and includes the following.

A monitoring window is determined.

A wake-up signal is monitored in the monitoring window.

Transmission of the first communication node is determined according to a monitoring result of the wake-up signal.

An embodiment of the present application provides a wake-up signal sending method. The method is applied to a second communication mode and includes the following.

A monitoring window is determined.

A wake-up signal is sent in the monitoring window.

An embodiment of the present application provides a first communication node. The first communication node includes a processor configured to perform the wake-up signal monitoring method of any preceding embodiment when executing a computer program.

An embodiment of the present application provides a second communication node. The second communication node includes a processor configured to perform the wake-up signal sending method of any preceding embodiment when executing a computer program.

An embodiment of the present application further provides a computer-readable storage medium storing a computer program which, when executed by a processor, causes the processor to perform the method of any preceding embodiment.

The preceding embodiments and other aspects of the present application and implementations thereof are described in more detail in the brief description of drawings, detailed description, and claims.

### BRIEF DESCRIPTION OF DRAWINGS

FIG. 1 is a networking diagram of a wireless communication system according to an embodiment;
FIG. 2 is a flowchart of a wake-up signal monitoring method according to an embodiment;
FIG. 3 is a schematic diagram illustrating the determination of a monitoring window according to an embodiment;
FIG. 4 is another schematic diagram illustrating determination of a monitoring window according to an embodiment;
FIG. 5 is a schematic diagram illustrating switchover of a first communication node between working manners according to an embodiment;
FIG. 6 is another schematic diagram illustrating switchover of a first communication node between working manners according to an embodiment;
FIG. 7 is a schematic diagram of a wake-up signal monitoring method according to an embodiment;
FIG. 8 is another schematic diagram of a wake-up signal monitoring method according to an embodiment;
FIG. 9 is another schematic diagram of a wake-up signal monitoring method according to an embodiment;
FIG. 10 is another schematic diagram of a wake-up signal monitoring method according to an embodiment;
FIG. 11 is a flowchart of a wake-up signal sending method according to an embodiment;
FIG. 12 is a structural diagram of a wake-up signal monitoring apparatus according to an embodiment;
FIG. 13 is a structural diagram of a wake-up signal sending apparatus according to an embodiment;
FIG. 14 is a structural diagram of a terminal according to an embodiment; and
FIG. 15 is a structural diagram of a base station according to an embodiment.

### DETAILED DESCRIPTION

It is to be understood that the embodiments described herein are intended to explain the present application, not to limit the present application. Embodiments of the present application are described hereinafter in detail in conjunction with drawings.

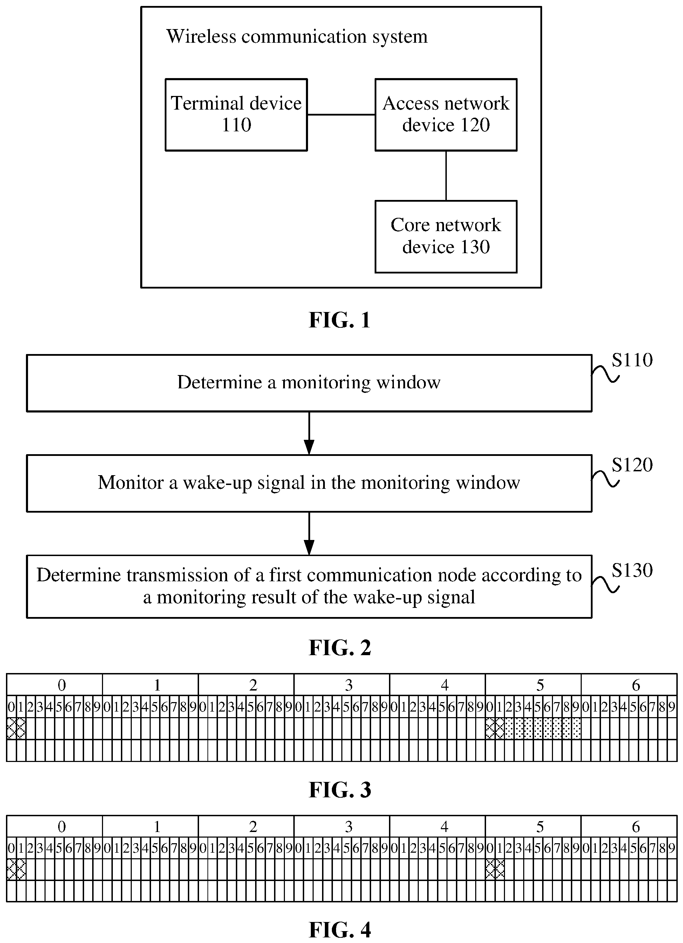

A wake-up signal monitoring method and a wake-up signal sending method of the present application may be applied to various wireless communication systems, for example, a long-term evolution (LTE) system, a 4th-generation (4G) mobile communication technology system, a 5th-generation (5G) mobile communication technology system, an LTE and 5G hybrid architecture system, a 5G New Radio (NR) system, and a new communication system emerging in future communication development, for example, a 6th-generation (6G) mobile communication technology system. FIG. 1 is a networking diagram of a wireless communication system according to an embodiment. As shown in FIG. 1, the wireless communication system includes a terminal device 110, an access network device 120, and a core network device 130.

The terminal device 110 may be a wireless transceiving device that may be deployed on land (for example, an indoor or outdoor device, a handheld device, a wearable device, or a vehicle-mounted device), deployed on the water surface (for example, a ship), or deployed in the air (for example, an aircraft, a balloon, or a satellite). The terminal device 110 may be, for example, a passive terminal, a user equipment (UE), a mobile phone, a mobile station, a tablet computer, a notebook computer, an ultra-mobile personal computer (UMPC), a handheld computer, a netbook, a personal digital assistant (PDA), another user equipment connectable to a network, a virtual reality (VR) terminal, an augmented reality (AR) terminal, an industrial control terminal, a wireless terminal in self-driving, a wireless terminal in remote medicine, a wireless terminal in a smart grid, a wireless terminal in transportation safety, a wireless terminal in a smart city, a wireless terminal in a smart home, an Internet of Things node in the Internet of Things, a vehicle-mounted communication apparatus in vehicle-to-everything, an entertainment or gaming device or system, or a global positioning system device. The embodiments of the present application do not limit technologies and forms used by the terminal device. The terminal device may be referred to as a terminal.

The access network device 120 is an access device through which the terminal device 110 accesses the wireless communication system in a wireless manner. The access network device 120 may include a reader/writer, a base station, an evolved NodeB (eNB or eNodeB) in long-term evolution advanced (LTEA), a transmission reception point (TRP), a base station or next-generation NodeB (gNB) in a 5G mobile communication system, a base station in a future mobile communication system, and an access node in a Wireless Fidelity (Wi-Fi) system. The base station may be, for example, a macro base station, a micro base station, a home base station, a wireless remote station, a router, a Wi-Fi device, a primary-cell device, a secondary-cell device, another network device, or a location management function (LMF) device. The access network device 120 may be a module or unit for implementing some functions of the base station, for example, a central unit (CU) or a distributed unit (DU). The embodiments of the present application do not limit technologies and forms used by the access network device. The access network device may be referred to as a base station.

The core network device 130 may include an access and mobility management network element or a session management network element. For example, the terminal device 110 may access the core network through the access network device 120 to perform data transmission.

In the embodiments of the present application, a wake-up signal monitoring method, a wake-up signal sending method, a communication node, and a storage medium are provided, which are operable in the preceding wireless communication system. A wake-up signal monitoring mechanism is proposed so that data transmission is performed after a wake-up signal is monitored and a deep sleep state is maintained when no wake-up signal is monitored, and thus power consumption of the terminal device is further reduced.

The following describes the wake-up signal monitoring method, the wake-up signal sending method, the communication node, and the technical effects thereof.

FIG. 2 is a flowchart of a wake-up signal monitoring method according to an embodiment. As shown in FIG. 2, the method of this embodiment is applied to a first communication node. In this example, the first communication node (which may also be referred to as a first communication node device) may be a terminal device such as a UE. The method includes S110, S120, and S130.

In S110, a monitoring window is determined.

In an embodiment, a method for determining the monitoring window may be performed in at least one of the following six manners.

Manner one: a time domain start location of the monitoring window or a time domain end location of the monitoring window is determined according to at least a first time domain location.

The first time domain location includes at least one of the following: a paging occasion (PO) corresponding to the first communication node, a paging frame (PF) corresponding to the first communication node, the first PO in the PF corresponding to the first communication node, a PO configured through signaling, a predefined PO, a paging early indication (PEI) corresponding to the first communication node, a random access occasion (RO) corresponding to the first communication node, a synchronization/system information block (SSB), a primary synchronization signal (PSS), a secondary synchronization signal (SSS), a low-power synchronization signal (LP-SS), or a first sequence.

In example 1.1, if the first time domain location is the PO corresponding to the first communication node, the first communication node determines the time domain start location of the monitoring window or the time domain end location of the monitoring window according to at least the PO corresponding to the first communication node. Specifically, assuming that the index of the subframe or slot in which the PO corresponding to the first communication node is located is n, subframe n-k1 or slot n-k1 is the time domain start location of the monitoring window or the time domain end location of the monitoring window, where k1 is an integer greater than or equal to 0.

In example 1.2, if the first time domain location is the PF corresponding to the first communication node, the first communication node determines the time domain start location of the monitoring window or the time domain end location of the monitoring window according to at least the PF corresponding to the first communication node. Specifically, assuming that the index of the radio frame in which the PF corresponding to the first communication node is located is m, k2 subframes or k2 slots or k2 radio frames before the radio frame m are the time domain start location of the monitoring window or the time domain end location of the monitoring window, where k2 is an integer greater than or equal to 0.

In example 1.3, if the first time domain location is the first PO in the PF corresponding to the first communication node, the first communication node determines the time domain start location of the monitoring window or the time domain end location of the monitoring window according to at least the first PO in the PF corresponding to the first communication node. Specifically, assuming that the index of the subframe or slot in which the first PO in the PF corresponding to the first communication node is located is f, subframe f-k3 or slot f-k3 is the time domain start location of the monitoring window or the time domain end location of the monitoring window, where k3 is an integer greater than or equal to 0.

In example 1.4, if the first time domain location is the predefined PO, the first communication node determines the time domain start location of the monitoring window or the time domain end location of the monitoring window according to at least the predefined PO. The predefined PO may be the n-th PO in every N POs, where N and n are integers greater than or equal to 1. The predefined PO may be a PO indicated by signaling. Specifically, assuming that the first communication node determines, according to a higher-layer parameter, that the index of the subframe or slot in which the predefined PO is located is g, subframe g-k4 or slot g-k4 is the time domain start location of the monitoring window or the time domain end location of the monitoring window, where k4 is an integer greater than or equal to 0.

In example 1.5, if the first time domain location is a PEI PDCCH corresponding to the first communication node, the first communication node determines the time domain start location of the monitoring window or the time domain end location of the monitoring window according to at least the PEI PDCCH corresponding to the first communication node. Specifically, assuming that the index of the slot in which the PEI PDCCH corresponding to the first communication node is located is h, slot h-k5 is the time domain start location of the monitoring window or the time domain end location of the monitoring window, where k5 is an integer greater than or equal to 0.

In example 1.6, if the first time domain location is the RO corresponding to the first communication node, the first communication node determines the time domain start location of the monitoring window or the time domain end location of the monitoring window according to at least the RO corresponding to the first communication node. Specifically, assuming that the index of the slot in which the RO corresponding to the first communication node is located is r, slot r-k6 is the time domain start location of the monitoring window or the time domain end location of the monitoring window, where k6 is an integer greater than or equal to 0.

In example 1.7, if the first time domain location is the SSB, the first communication node determines the time domain start location of the monitoring window or the time domain end location of the monitoring window according to at least the time domain location of the SSB.

In example 1.8, if the first time domain location is the LP-SS, the first communication node determines the time domain start location of the monitoring window or the time domain end location of the monitoring window according to at least the time domain location of the LP-SS.

In example 1.9, if the first time domain location is the first sequence, the first communication node determines the time domain start location of the monitoring window or the time domain end location of the monitoring window according to at least the time domain location of the first sequence. The first sequence is a preset sequence sent aperiodically.

Manner two: the time domain start location of the monitoring window is determined according to at least period information.

The period information includes at least one of the following: a first period based on the first communication node, a second period based on a communication node group, a period corresponding to the SSB, a period corresponding to the PSS, a period corresponding to the SSS, or a period corresponding to the LP-SS.

In example 2.1, if the period information is the first period based on the first communication node, the first communication node may determine the time domain start location of the monitoring window according to the first period. Specifically, assuming that the first period based on the first communication node is T1, a subframe or a slot whose subframe index or slot index modulo T1 is equal to 0 is the time domain start location of the monitoring window. The subframe index or the slot index is determined through the LP-SS or the SSB. Alternatively, the subframe index or the slot index is an index that starts to be numbered after a second receiver or a second module is turned on. Alternatively, the subframe index or the slot index is an index that starts to be numbered after a low-power wake-up signal (LP-WUS) mode is started.

In example 2.2, if the period information is the first period based on the first communication node, the first communication node determines the time domain start location of the monitoring window according to at least the first period. Specifically, assuming that the first period based on the first communication node is T1, a subframe or a slot whose subframe index or slot index modulo T1 is equal to z1 is the time domain start location of the monitoring window, where z1 is an integer greater than or equal to 0. The subframe index or the slot index is determined through the LP-SS or the SSB. Alternatively, the subframe index or the slot index is the index that starts to be numbered after the second receiver or the second module is turned on. Alternatively, the subframe index or the slot index is the index that starts to be numbered after the LP-WUS mode is started.

In example 2.3, if the period information is the first period based on the first communication node, the first communication node determines the time domain start location of the monitoring window according to at least the first period. Specifically, assuming that the first period based on the first communication node is T1, z1 subframes or z1 slots before the subframe or the slot whose subframe index or slot index modulo T1 is equal to 0 are the time domain start location of the monitoring window, where z1 is an integer greater than or equal to 0. The subframe index or the slot index is determined through the LP-SS or the SSB. Alternatively, the subframe index or the slot index is the index that starts to be numbered after the second receiver or the second module is turned on. Alternatively, the subframe index or the slot index is the index that starts to be numbered after the LP-WUS mode is started.

In example 2.4, if the period information is the second period based on the communication node group, the first communication node may determine the time domain start location of the monitoring window according to the second period. In an embodiment, the second period may be determined according to a corresponding node group index and the correspondence between the node group index and the second period.

The node group index is determined in any one of the following manners.

The node group index is determined according to a group index indicated by a core network (CN).

The node group index is determined by calculating an identity (ID) of the first communication node modulo x, where x is the number of communication node groups.

POs in a discontinuous reception (DRX) cycle are divided into x groups, and the node group index is determined according to the index of the PO group in which the PO corresponding to the first communication node is located, where x is the number of communication node groups.

The node group index is determined according to signaling.

Specifically, assuming the number of communication node groups is x, the access network device configures x second periods {T₁, T₂, ..., and Tₓ}. The first communication node determines the second period Tᵢ corresponding to the first communication node and then determines the time domain start location of the monitoring window according to Tᵢ. For the manner in which the first communication node determines the time domain start location of the monitoring window according to Tᵢ, reference may be made to examples 2.1 to 2.3 mentioned above and for brevity, the details are not repeated here.

In example 2.5, if the period information is the period corresponding to the SSB, the first communication node determines the time domain start location of the monitoring window according to at least the period corresponding to the SSB.

In example 2.6, if the period information is the period corresponding to the PSS, the first communication node determines the time domain start location of the monitoring window according to at least the period corresponding to the PSS.

In example 2.7, if the period information is the period corresponding to the SSS, the first communication node determines the time domain start location of the monitoring window according to at least the period corresponding to the SSS.

In example 2.8, if the period information is the period corresponding to the LP-SS, the first communication node determines the time domain start location of the monitoring window according to at least the period corresponding to the LP-SS.

Manner three: the time domain length of the monitoring window is determined according to at least a search space of a control channel.

The control channel includes at least one of a PDCCH or a PEI PDCCH.

In example 3.1, if the control channel is the PDCCH, the first communication node determines the time domain length of the monitoring window according to at least a search space length of the PDCCH. Specifically, the time domain length of the monitoring window is equal to the product of the search space length of the PDCCH and a first parameter, where the first parameter is a number greater than 0.

In example 3.2, if the control channel is the PDCCH, the first communication node determines the time domain length of the monitoring window according to at least the search space length of the PDCCH. Specifically, the time domain length of the monitoring window is a maximum value taken from the search space length of the PDCCH and a second parameter, where the second parameter is a number greater than 0.

In example 3.3, if the control channel is the PEI PDCCH, the first communication node determines the time domain length of the monitoring window according to at least a search space length of the PEI PDCCH. Specifically, the time domain length of the monitoring window is equal to the product of the search space length of the PEI PDCCH and a third parameter, where the third parameter is a number greater than 0.

In example 3.4, if the control channel is the PEI PDCCH, the first communication node determines the time domain length of the monitoring window according to at least the search space length of the PEI PDCCH. Specifically, the time domain length of the monitoring window is a maximum value taken from the search space length of the PEI PDCCH and a fourth parameter, where the fourth parameter is a number greater than 0.

Manner four: the time domain length of the monitoring window is determined according to at least a first length or a first ratio.

The first length or the first ratio is a predefined value, or a value configured through higher-layer signaling, or a value determined according to at least a time domain length corresponding to the wake-up signal, or a value determined according to at least an extreme value of the time domain length corresponding to the wake-up signal, or a value determined according to at least a search space length corresponding to the wake-up signal.

In example 4.1, the first communication node determines the time domain length of the monitoring window according to the first length or the first ratio. Specifically, the time domain length of the monitoring window is equal to the first length, or the time domain length of the monitoring window is equal to the product of the first ratio and a period.

In example 4.2, the first communication node determines the time domain length of the monitoring window according to at least the first length. Specifically, assuming that the length of an initial monitoring window is the first length, the first communication node continues monitoring the wake-up signal for a first length offset after the initial monitoring window if the wake-up signal is monitored in the initial monitoring window, that is, the length of the monitoring window is the sum of the first length and the first length offset, where the first length offset is a number greater than 0; and the length of the monitoring window is the first length if no wake-up signal is monitored in the initial monitoring window.

Specifically, referring to FIG. 3, the first communication node determines that the initial monitoring window is slot 0 and slot 1 in radio frame 0. If the first communication node monitors no LP-WUS in the initial monitoring window, the first communication node does not start monitoring an LP-WUS until slot 0 in radio frame 5. If the first communication node monitors the LP-WUS in slot 0 and the slot 1 in radio frame 5, the first communication node continues monitoring the LP-WUS until the end of slot 9.

In example 4.3, the first communication node determines the time domain length of the monitoring window according to at least the first length. Specifically, the first length is equal to the product of the search space length corresponding to the wake-up signal and a fifth parameter, where the fifth parameter is a number greater than 0.

Manner five: at least one of the time domain start location of the monitoring window, the time domain end location of the monitoring window, the time domain length of the monitoring window, the number of monitoring windows, the interval between monitoring windows, or a frequency domain location of the monitoring window is determined according to at least first signaling.

The first signaling is signaling carried by the LP-SS, signaling carried by the LP-WUS, or higher-layer signaling. The first signaling includes at least one of the following: signaling indicating the first time domain location, signaling indicating the first period, signaling indicating the first length or the first ratio, signaling indicating k1, signaling indicating k2, signaling indicating k3, signaling indicating k4, signaling indicating k5, signaling indicating k6, signaling indicating z1, signaling indicating the first parameter, signaling indicating the second parameter, signaling indicating the third parameter, signaling indicating the fourth parameter, signaling indicating the fifth parameter, signaling indicating the first length offset, signaling indicating a frequency domain offset, or signaling indicating the frequency domain location.

In example 5.1, the first communication node determines at least one of the time domain start location of the monitoring window or the time domain end location of the monitoring window or the time domain length of the monitoring window according to at least the first signaling. The first signaling is obtained through the LP-SS and includes the first period and the first length.

Specifically, the first communication node determines the time domain start location of the monitoring window according to the first period and determines the time domain length of the monitoring window according to the first length. Referring to FIG. 4, for example, assuming that the first period T = 5 radio frames and the first length is 2 slots, a slot whose slot index modulo 10*T is equal to 0 is the time domain start location of the monitoring window, and the time domain length of the monitoring window is 2 slots. In the monitoring window corresponding to slot 0 and slot 1 in radio frame 0, the first communication node monitors no LP-WUS. Then, the first communication node does not monitor the LP-WUS again until slot 0 in radio frame 5 and continues monitoring the LP-WUS until slot 1.

Manner six: the frequency domain location of the monitoring window is determined according to at least a frequency domain location of a synchronization signal.

In example 6.1, the first communication node may determine the frequency domain location of the monitoring window according to the frequency domain location of the synchronization signal. Specifically, assuming that the frequency domain location of the synchronization signal is f₁, the frequency domain location of the monitoring window is also f₁.

In example 6.2, the first communication node may determine the frequency domain location of the monitoring window according to the frequency domain location of the synchronization signal and a first frequency domain offset. Specifically, assuming that the frequency domain location of the synchronization signal is f₁ and the first frequency domain offset is fₖ, the frequency domain location of the monitoring window is f₁-fₖ or f₁+fₖ or is between f₁-fₖ and f₁+fₖ.

In S120, the wake-up signal is monitored in the monitoring window.

After the monitoring window is determined, the first communication node monitors the wake-up signal in the monitoring window.

In an embodiment, the first communication node provided in the present application may have two working manners. In one of the working manners, the first communication node constantly monitors the wake-up signal. The other working manner is the one used in S110 and S120 in the present application, that is, the first communication node monitors the wake-up signal only in the monitoring window. Therefore, the first communication node may further switch between the two working manners. Examples of four switching manners are exemplarily provided in the present application.

Switching manner one: The first communication node monitors the wake-up signal constantly before fourth signaling is received and monitors the wake-up signal in the monitoring window after the fourth signaling is received. The fourth signaling is higher-layer signaling, signaling carried by the LP-SS, or signaling carried by the first sequence.

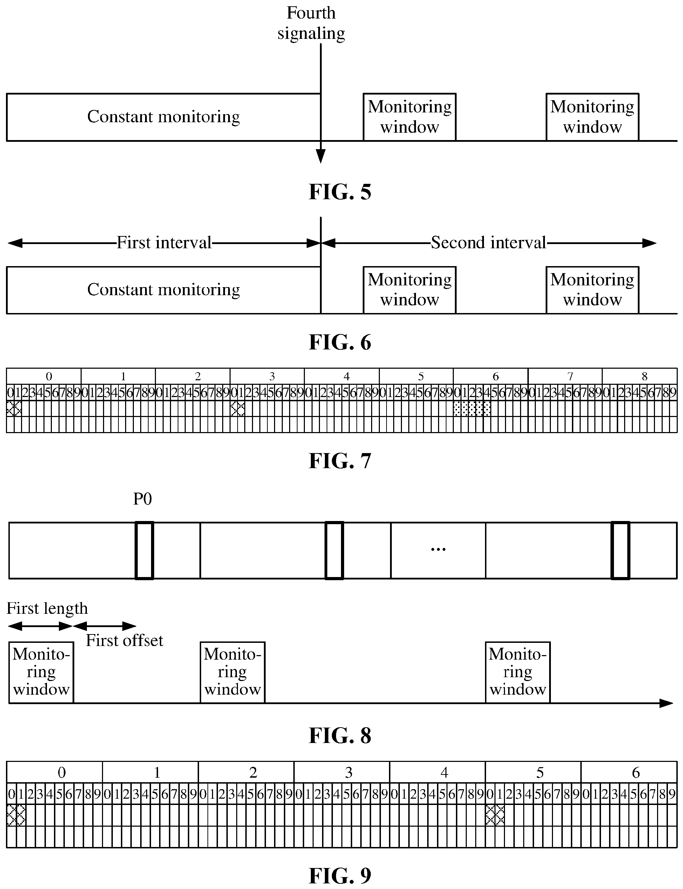

For example, FIG. 5 is a schematic diagram illustrating the switchover of the first communication node between the working manners according to an embodiment. As shown in FIG. 5, the first communication node constantly monitors the wake-up signal, when the received LP-SS carries the fourth signaling, the first communication node determines the location of the monitoring window and monitors the wake-up signal only in the monitoring window, and after monitoring the fourth signaling, the first communication node determines the time domain start location of the monitoring window according to the first period and determines the time domain length of the monitoring window according to a predefined length. Specifically, assuming that the first period is T1, a subframe or a slot whose subframe index or slot index modulo T1 is equal to 0 is the time domain start location of the monitoring window. The subframe index or the slot index is determined according to the LP-SS, and the first period is determined through the fourth signaling.

Switching manner two: The first communication node monitors the wake-up signal constantly within a first interval, determines the monitoring window within a second interval, and monitors the wake-up signal only in the monitoring window. The first interval and the second interval have predefined time lengths or time lengths configured through signaling, or the first communication node corresponds to different radio resource control (RRC) states within the first interval and the second interval.

For example, FIG. 6 is another schematic diagram illustrating the switchover of the first communication node between the working manners according to an embodiment. As shown in FIG. 6, the first communication node constantly monitors the wake-up signal within the first interval, determines the location of the monitoring window within the second interval, and monitors the wake-up signal within the monitoring window. Assuming that the first interval and the second interval have the predefined time lengths and first intervals alternate with second intervals, the first communication node determines the time domain start location of the monitoring window according to the first period and determines the time domain length of the monitoring window according to the predefined length within the second interval. Specifically, assuming that the first period is T1, a subframe or a slot whose subframe index or slot index modulo T1 is equal to 0 is the time domain start location of the monitoring window. The subframe index or the slot index is an index numbered after the second interval begins.

For example, assuming that the first communication node corresponds to an RRC idle state or an RRC inactive state within the first interval and the first communication node corresponds to an RRC connected state within the second interval, the first communication node constantly monitors the wake-up signal in the RRC idle state or the RRC inactive state, and the first communication node monitors the wake-up signal only in the monitoring window in the RRC connected state.

For example, assuming that the first communication node corresponds to the RRC connected state within the first interval and the first communication node corresponds to the RRC idle state or the RRC inactive state within the second interval, the first communication node constantly monitors the wake-up signal in the RRC connected state, and the first communication node monitors the wake-up signal only in the monitoring window in the RRC idle state or the RRC inactive state.

Switching manner three: The first communication node constantly monitors the wake-up signal within the first interval. The first communication node also constantly monitors the wake-up signal within the second interval until the fourth signaling is received, and then the first communication node monitors the wake-up signal only in the monitoring window.

Switching manner four: The first communication node monitors the wake-up signal only in the monitoring window within the first interval. The first communication node also constantly monitors the wake-up signal only in the monitoring window within the second interval until the fourth signaling is received, and then the first communication node starts monitoring the wake-up signal constantly.

In S130, transmission of the first communication node is determined according to a monitoring result of the wake-up signal.

In an embodiment, the transmission of the first communication node is determined according to the monitoring result of the wake-up signal, which specifically includes any one of the following four cases.

If the wake-up signal is monitored in the monitoring window, monitoring the physical downlink control channel (PDCCH) is performed/a physical random access channel (PRACH) is sent.

If the wake-up signal is monitored in the monitoring window, whether to monitor the PDCCH or send the PRACH is determined according to wake-up information carried in the wake-up signal.

If the wake-up signal is monitored in the monitoring window, at least one of a time domain start location of a subsequent monitoring window, a time domain end location of the subsequent monitoring window, a time domain length of the subsequent monitoring window, the number of monitoring windows, the interval between monitoring windows, or a frequency domain location of the subsequent monitoring window is determined according to second signaling carried in the wake-up signal.

If the wake-up signal is monitored in the monitoring window, a location of an LP-SS or a first sequence to be subsequently monitored is determined according to third signaling carried in the wake-up signal. The third signaling is used for determining at least one of a period, a time domain offset, a frequency domain offset, or a time domain location corresponding to the LP-SS or the first sequence.

### Example 1

The first communication node monitors the LP-WUS in the determined monitoring window. If no LP-WUS is monitored until the end of the monitoring window, the first communication node does not start monitoring the LP-WUS until the next monitoring window. If the LP-WUS is monitored, the first communication node monitors the corresponding PDCCH or sends the corresponding PRACH.

### Example 2

The first communication node monitors the LP-WUS in the determined monitoring window. If no LP-WUS is monitored until the end of the monitoring window, the first communication node does not start monitoring the LP-WUS until the next monitoring window. If the LP-WUS is monitored, the first communication node determines, according to the information carried in the LP-WUS, whether to monitor the PDCCH or send the PRACH.

### Example 3

The first communication node monitors the LP-WUS in the determined monitoring window. If no LP-WUS is monitored until the end of the monitoring window, the first communication node does not start monitoring the LP-WUS until the next monitoring window. If the LP-WUS is monitored, the first communication node determines, according to the information carried in the LP-WUS, that monitoring the PDCCH is performed or the PRACH is sent.

### Example 4

The first communication node monitors the LP-WUS in the determined monitoring window. If it is monitored that the LP-WUS carries the second signaling, the first communication node determines the subsequent monitoring window according to the second signaling. The second signaling includes one or more pieces of signaling indicating at least one of the time domain start location of the subsequent monitoring window, the time domain end location of the subsequent monitoring window, the time domain length of the subsequent monitoring window, the number of monitoring windows, the interval between monitoring windows, or the frequency domain location of the subsequent monitoring window. Specifically, referring to FIG. 7, the first communication node determines the time domain start location of the monitoring window according to the first period and determines the time domain length of the monitoring window according to the first length. For example, assuming that the first period T = 3 radio frames and the first length is 2 slots, a slot whose slot index modulo 10*T is equal to 0 is the time domain start location of the monitoring window, and the time domain length of the monitoring window is 2 slots. In the monitoring window corresponding to slot 0 and slot 1 in radio frame 0, if the first communication node monitors no LP-WUS, the first communication node monitors the LP-WUS again in slot 0 and slot 1 in radio frame 3. In the monitoring window corresponding to slot 0 and slot 1 in radio frame 0, if the LP-WUS is monitored and the LP-WUS carries the second signaling and the second signaling indicates the first length, that is, the first length is 5 slots, the first communication node determines that the length of the next monitoring window is 5 slots, and the first communication node starts monitoring the LP-WUS from slot 0 in radio frame 6 until the end of slot 4.

### Example 5

The first communication node monitors the LP-WUS in the determined monitoring window. If it is monitored that the LP-WUS carries the third signaling, the first communication node determines, according to the third signaling, the location of the LP-SS or the first sequence to be subsequently monitored by the second receiver. The third signaling is used for determining at least one of the period, the time domain offset, the frequency domain offset, or the time domain location corresponding to the LP-SS or the first sequence.

Some embodiments are provided below to explain the wake-up signal monitoring method provided in the embodiment of the present application.

### Embodiment one

FIG. 8 is another schematic diagram of the wake-up signal monitoring method according to an embodiment. The first communication node determines the time domain end location of the monitoring window according to the PO corresponding to the first communication node and a first offset and determines the time domain length of the monitoring window according to the first length. The first communication node monitors the LP-WUS only in the monitoring window. The first offset and the first length are indicated by the first signaling.

The first communication node monitors the LP-WUS in the monitoring window. If no LP-WUS is monitored until the end of the monitoring window, the first communication node does not monitor the LP-WUS until the next monitoring window. If the LP-WUS is monitored, the first communication node monitors the PDCCH or sends the PRACH.

### Embodiment two

FIG. 9 is another schematic diagram of the wake-up signal monitoring method according to an embodiment. The first communication node determines the time domain start location of the monitoring window according to the second period and determines the time domain length of the monitoring window according to the first length. The first length is indicated by the first signaling. Assuming that 8 communication node groups exist, a second communication node configures a second period set as {T1, T2, ..., and T8}. For the first communication node, the terminal index modulo x (x = 8) is 5, so the second period corresponding to the first communication node is T5. In FIG. 9, for example, T5 = 5 radio frames, and the first length is 2 slots. A slot whose slot index modulo 5*T is equal to 0 is the time domain start location of the monitoring window. The monitoring window lasts for 2 slots and ends, as shown by the shaded part in FIG. 9.

The first communication node monitors the LP-WUS in the monitoring window. If no LP-WUS is monitored until the end of the monitoring window, the first communication node does not monitor the LP-WUS until the next monitoring window. If the LP-WUS is monitored, the first communication node monitors the PDCCH or sends the PRACH.

### Embodiment three

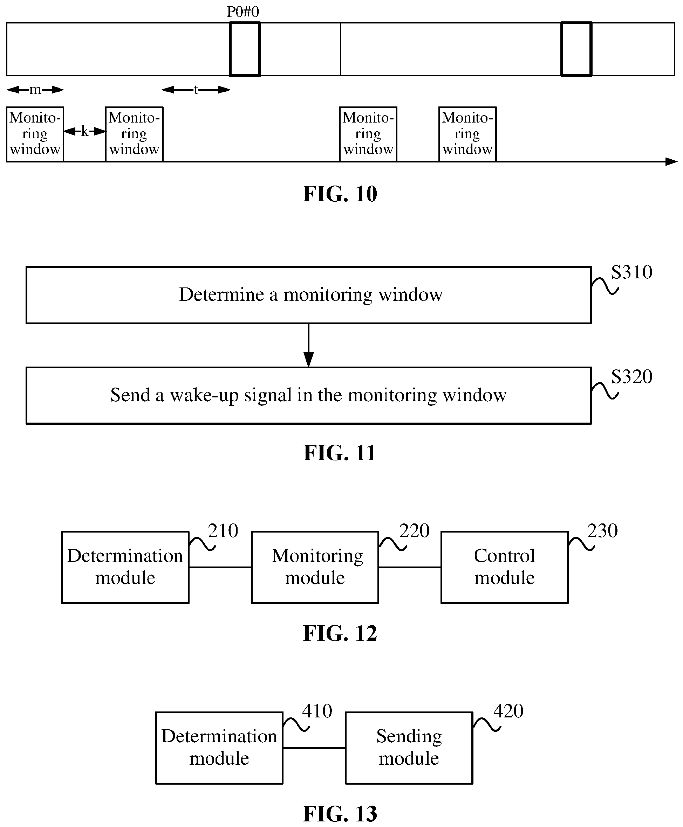

FIG. 10 is another schematic diagram of the wake-up signal monitoring method according to an embodiment. The first communication node determines the end location of the monitoring window according to the corresponding PO and the first offset t and determines the time domain length m of the monitoring window according to the first length. The number of monitoring windows is h, and the interval between the monitoring windows is k slots. The first communication node monitors the LP-WUS only in the monitoring window, as shown in FIG. 10. The first offset t, the number h of monitoring windows, and the interval k are indicated by the first signaling. The length of the monitoring window is the maximum value m of a search space of the LP-WUS.

The first communication node monitors the LP-WUS in the monitoring window. If no LP-WUS is monitored until the end of the monitoring window, the first communication node does not monitor the LP-WUS until the next monitoring window. If the LP-WUS is monitored, the first communication node receives the PO or sends the PRACH.

Thus, the wake-up signal monitoring mechanism is proposed in the present application so that the communication node is woken up to perform the data transmission when the wake-up signal is monitored and the communication node is in the deep sleep state when no wake-up signal is monitored. Accordingly, power consumption of the communication node is further reduced.

FIG. 11 is a flowchart of a wake-up signal sending method according to an embodiment. As shown in FIG. 11, the method of this embodiment is applied to the second communication node. In this example, the second communication node (which may also be referred to as a second communication node device) may be an access network device such as a base station. The method includes S310 and S320.

In S310, a monitoring window is determined.

In an embodiment, the monitoring window is determined, which includes at least one of the following.

A time domain start location of the monitoring window or a time domain end location of the monitoring window is determined according to at least a first time domain location.

The time domain start location of the monitoring window is determined according to at least period information.

The time domain length of the monitoring window is determined according to at least a search space of a control channel.

The time domain length of the monitoring window is determined according to at least a first length or a first ratio.

At least one of the time domain start location of the monitoring window, the time domain end location of the monitoring window, the time domain length of the monitoring window, the number of monitoring windows, the interval between monitoring windows, or a frequency domain location of the monitoring window is determined according to at least first signaling.

The frequency domain location of the monitoring window is determined according to at least a frequency domain location of a synchronization signal.

In an embodiment, the first time domain location includes at least one of the following: a paging occasion (PO) corresponding to a first communication node, a paging frame (PF) corresponding to the first communication node, the first PO in the PF corresponding to the first communication node, a PO configured through signaling, a predefined PO, a paging early indication (PEI) corresponding to the first communication node, a random access occasion (RO) corresponding to the first communication node, a time domain location of a sent synchronization/system information block (SSB), a time domain location of a sent primary synchronization signal (PSS), a time domain location of a sent secondary synchronization signal (SSS), a time domain location of a sent low-power synchronization signal (LP-SS), or a time domain location of a sent first sequence.

In an embodiment, the period information includes at least one of the following: a first period configured based on the first communication node, a second period configured based on a communication node group, a period of the sent SSB, a period of the sent PSS, a period of the sent SSS, or a period of the sent LP-SS.

In an embodiment, the control channel includes at least one of the following: a physical downlink control channel (PDCCH) corresponding to the first communication node or a PEI PDCCH corresponding to the first communication node.

In an embodiment, the first length or the first ratio is a predefined value, or a value configured through higher-layer signaling, or a value determined according to at least a time domain length corresponding to the wake-up signal, or a value determined according to at least an extreme value of the time domain length corresponding to the wake-up signal, or a value determined according to at least a search space length corresponding to the wake-up signal.

In an embodiment, the first signaling is signaling carried by an LP-SS, signaling carried by a low-power wake-up signal (LP-WUS), or higher-layer signaling.

In an embodiment, the second communication node sends the wake-up signal through at least one of the following: the monitoring window corresponding to the first communication node is determined after fifth signaling is sent, where the fifth signaling is at least one of higher layer signaling, signaling carried by the first sequence, or signaling carried by the LP-SS; or the second communication node determines, within a third interval, the monitoring window corresponding to the first communication node, where the third interval is a predefined time period or a time period configured through signaling or a radio resource control (RRC) state corresponding to the first communication node within the third interval is a preset state, and the preset state refers to an idle state, or an inactive state, or a new state.

The method for determining the monitoring window in this embodiment is similar to the method with which the first communication node determines the monitoring window. Reference may be made to the description in the preceding embodiment. For brevity, the details are not repeated here.

In S320, the wake-up signal is sent in the monitoring window.

When one or more first communication nodes need to be woken up to perform data transmission, the second communication node sends the corresponding wake-up signal in the monitoring window.

FIG. 12 is a structural diagram of a wake-up signal monitoring apparatus according to an embodiment. The apparatus may be configured in a first communication node. As shown in FIG. 12, the apparatus includes a determination module 210, a monitoring module 220, and a control module 230.

The determination module 210 is configured to determine a monitoring window.

The monitoring module 220 is configured to monitor a wake-up signal in the monitoring window.

The control module 230 is configured to determine transmission of the first communication node according to a monitoring result of the wake-up signal.

The wake-up signal monitoring apparatus provided in this embodiment is configured to perform the wake-up signal monitoring method provided in the preceding embodiment. The implementation principles and technical effects of the wake-up signal monitoring apparatus provided in this embodiment are similar to those of the preceding embodiment and thus are not described here again.

In an embodiment, the determination module 210 is configured to determine a time domain start location of the monitoring window or a time domain end location of the monitoring window according to at least a first time domain location, determine a time domain start location of the monitoring window according to at least period information, determine the time domain length of the monitoring window according to at least a search space of a control channel, determine the time domain length of the monitoring window according to at least a first length or a first ratio, determine at least one of a time domain start location of the monitoring window, a time domain end location of the monitoring window, the time domain length of the monitoring window, the number of monitoring windows, the interval between monitoring windows, or a frequency domain location of the monitoring window according to at least first signaling, or determine a frequency domain location of the monitoring window according to at least a frequency domain location of a synchronization signal.

In an embodiment, the first time domain location includes at least one of the following: a paging occasion (PO) corresponding to the first communication node, a paging frame (PF) corresponding to the first communication node, the first PO in the PF corresponding to the first communication node, a PO configured through signaling, a predefined PO, a paging early indication (PEI) corresponding to the first communication node, a random access occasion (RO) corresponding to the first communication node, a synchronization/system information block (SSB), a primary synchronization signal (PSS), a secondary synchronization signal (SSS), a low-power synchronization signal (LP-SS), or a first sequence.

In an embodiment, the period information includes at least one of the following: a first period based on the first communication node, a second period based on a communication node group, a period of the SSB, a period of the PSS, a period of the SSS, or a period of the LP-SS.

In an embodiment, the period information includes the second period based on the communication node group.

The determination module 210 is further configured to determine the second period according to a corresponding node group index and the correspondence between the node group index and the second period.

In an embodiment, the node group index is determined in any one of the following manners.

The node group index is determined according to a group index indicated by a core network (CN).

The node group index is determined by calculating an identity (ID) of the first communication node modulo x, where x is the number of communication node groups.

POs in a discontinuous reception (DRX) cycle are divided into x groups, and the node group index is determined according to the index of the PO group in which the PO corresponding to the first communication node is located, where x is the number of communication node groups.

The node group index is determined according to signaling.

In an embodiment, the first signaling is signaling carried by the LP-SS, signaling carried by the LP-WUS, or higher-layer signaling.

In an embodiment, the control channel includes at least one of the following: a physical downlink control channel (PDCCH) or a PEI PDCCH.

In an embodiment, the first length or the first ratio is a predefined value, or a value configured through higher-layer signaling, or a value determined according to at least a time domain length corresponding to the wake-up signal, or a value determined according to at least an extreme value of the time domain length corresponding to the wake-up signal, or a value determined according to at least a search space length corresponding to the wake-up signal.

In an embodiment, the control module 230 is configured to: in response to the wake-up signal being monitored in the monitoring window, monitor a physical downlink control channel (PDCCH) or send a physical random access channel (PRACH); in response to the wake-up signal being monitored in the monitoring window, determine, according to wake-up information carried in the wake-up signal, whether to monitor a PDCCH or send a PRACH; in response to the wake-up signal being monitored in the monitoring window, determine at least one of a time domain start location of a subsequent monitoring window, a time domain end location of the subsequent monitoring window, the time domain length of the subsequent monitoring window, the number of monitoring windows, the interval between monitoring windows, or a frequency domain location of the subsequent monitoring window according to second signaling carried in the wake-up signal; or in response to the wake-up signal being monitored in the monitoring window, determine, according to third signaling carried in the wake-up signal, a location of an LP-SS or a first sequence to be subsequently monitored by a second receiver, where the third signaling is used for determining at least one of a period, a time domain offset, a frequency domain offset, or a time domain location corresponding to the LP-SS or the first sequence.

In an embodiment, the first communication node monitors the wake-up signal constantly before fourth signaling is received, the determination module 210 determines the monitoring window after the fourth signaling is received, and the monitoring module 220 monitors the wake-up signal in the monitoring window. The fourth signaling is at least one of higher-layer signaling, signaling carried by the LP-SS, or signaling carried by the first sequence.

In an embodiment, the first communication node monitors the wake-up signal constantly within a first interval, the determination module 210 determines the monitoring window within a second interval, and the monitoring module 220 monitors the wake-up signal in the monitoring window. The first interval and the second interval are predefined time periods or time periods configured through signaling, or the first communication node corresponds to different radio resource control (RRC) states within the first interval and the second interval.

In an embodiment, the first communication node monitors the wake-up signal constantly within the first interval, the determination module 210 determines the monitoring window within the second interval after the fourth signaling is received, and the monitoring module 220 monitors the wake-up signal in the monitoring window.

FIG. 13 is a structural diagram of a wake-up signal sending apparatus according to an embodiment. The apparatus may be configured in a second communication node. As shown in FIG. 13, the apparatus includes a determination module 410 and a sending module 420.

The determination module 410 is configured to determine a monitoring window.

The sending module 420 is configured to send a wake-up signal in the monitoring window.

The wake-up signal sending apparatus provided in this embodiment is configured to perform the wake-up signal sending method provided in the preceding embodiment. The implementation principles and technical effects of the wake-up signal sending apparatus provided in this embodiment are similar to those of the preceding embodiment and thus are not described here again.

In an embodiment, the determination module 410 is configured to determine a time domain start location of the monitoring window or a time domain end location of the monitoring window according to at least a first time domain location, determine a time domain start location of the monitoring window according to at least period information, determine the time domain length of the monitoring window according to at least a search space of a control channel, determine the time domain length of the monitoring window according to at least a first length or a first ratio, determine at least one of a time domain start location of the monitoring window, a time domain end location of the monitoring window, the time domain length of the monitoring window, the number of monitoring windows, the interval between monitoring windows, or a frequency domain location of the monitoring window according to at least first signaling, or determine a frequency domain location of the monitoring window according to at least a frequency domain location of a synchronization signal.

In an embodiment, the first time domain location includes at least one of the following: a paging occasion (PO) corresponding to a first communication node, a paging frame (PF) corresponding to the first communication node, the first PO in the PF corresponding to the first communication node, a PO configured through signaling, a predefined PO, a paging early indication (PEI) corresponding to the first communication node, a random access occasion (RO) corresponding to the first communication node, a time domain location of a sent synchronization/system information block (SSB), a time domain location of a sent primary synchronization signal (PSS), a time domain location of a sent secondary synchronization signal (SSS), a time domain location of a sent low-power synchronization signal (LP-SS), or a time domain location of a sent first sequence.

In an embodiment, the period information includes at least one of the following: a first period configured based on the first communication node, a second period configured based on a communication node group, a period of the sent SSB, a period of the sent PSS, a period of the sent SSS, or a period of the sent LP-SS.

In an embodiment, the control channel includes at least one of the following: a physical downlink control channel (PDCCH) corresponding to the first communication node or a PEI PDCCH corresponding to the first communication node.

In an embodiment, the first length or the first ratio is a predefined value, or a value configured through higher-layer signaling, or a value determined according to at least a time domain length corresponding to the wake-up signal, or a value determined according to at least an extreme value of the time domain length corresponding to the wake-up signal, or a value determined according to at least a search space length corresponding to the wake-up signal.

In an embodiment, the first signaling is signaling carried by an LP-SS, signaling carried by a low-power wake-up signal (LP-WUS), or higher-layer signaling.

In an embodiment, the determination module 410 is configured to determine the monitoring window corresponding to the first communication node after fifth signaling is sent. The fifth signaling is at least one of higher-layer signaling, signaling carried by a first sequence, or signaling carried by the LP-SS. Alternatively, the determination module 410 is configured to determine, within a third interval, the monitoring window corresponding to the first communication node. The third interval is a predefined time period or a time period configured through signaling, a radio resource control (RRC) state corresponding to the first communication node within the third interval is a preset state, or the monitoring window corresponding to the first communication node is determined according to the fifth signaling within the third interval.

An embodiment of the present application further provides a communication node. The communication node includes a processor configured to perform the method provided in any embodiment of the present application when executing a computer program. Specifically, the communication node may be a first communication node or a second communication node. The first communication node includes a processor configured to perform the wake-up signal monitoring method of any embodiment of the present application when executing a computer program. The second communication node includes a processor configured to perform the wake-up signal sending method of any embodiment of the present application when executing a computer program. For example, the first communication node may be a terminal device of any embodiment of the present application such as a UE, and the second communication node may be an access network device of any embodiment of the present application such as a base station, which are not specifically limited in the present application.

For example, the following embodiments provide a structural diagram of a terminal as the communication node and a structural diagram of a base station as the communication node.

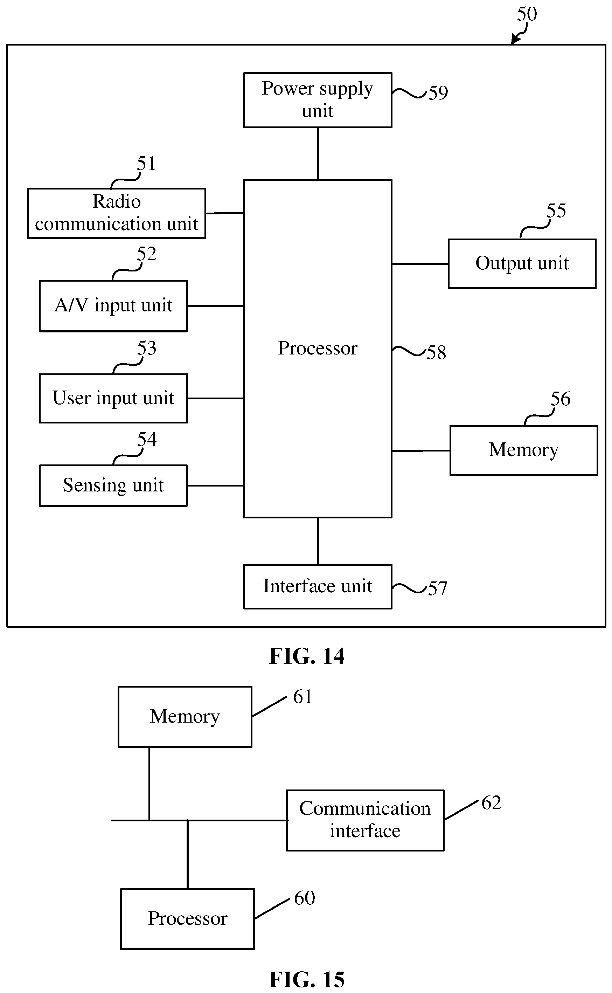

FIG. 14 is a structural diagram of the terminal according to an embodiment. The terminal may be implemented in multiple forms. The terminal in the present application may include, but is not limited to, mobile terminal devices such as a mobile phone, a smart phone, a notebook computer, a digital broadcast receiver, a personal digital assistant (PDA), a portable device (PAD), a portable multimedia player (PMP), a navigation apparatus, a vehicle-mounted terminal device, a vehicle-mounted display terminal and a vehicle-mounted electronic rearview mirror and fixed terminal devices such as a digital television (TV) and a desktop computer.

As shown in FIG. 14, the terminal 50 may include a radio communication unit 51, an audio/video (A/V) input unit 52, a user input unit 53, a sensing unit 54, an output unit 55, a memory 56, an interface unit 57, a processor 58, and a power supply unit 59. FIG. 14 shows the terminal including multiple components. However, it is to be understood that not all the shown components are required to be implemented. More or fewer components may be implemented instead.

In this embodiment, the radio communication unit 51 allows radio communication between the terminal 50 and a base station or a network. The A/V input unit 52 is configured to receive audio or video signals. The user input unit 53 may generate key input data according to commands input by a user to control various operations of the terminal 50. The sensing unit 54 monitors the current state of the terminal 50, the position of the terminal 50, the presence or absence of the user's touch input into the terminal 50, the orientation of the terminal 50, the acceleration or deceleration of the terminal 50, the direction of the acceleration or deceleration and the like and generates commands or signals for controlling the operations of the terminal 50. The interface unit 57 serves as an interface through which at least one external apparatus can be connected to the terminal 50. The output unit 55 is configured to provide output signals in a visual, audio, and/or tactile manner. The memory 56 may store software programs of processing and control operations executed by the processor 58 and the like or may temporarily store data that has been output or is to be output. The memory 56 may include at least one type of storage medium. Moreover, the terminal 50 may cooperate with a network storage apparatus that implements the storage function of the memory 56 through a network connection. The processor 58 is generally configured to control an overall operation of the terminal 50. Under the control of the processor 58, the power supply unit 59 receives external power or internal power and provides appropriate power required for operating various elements and components.

The processor 58 executes the programs stored in the memory 56 to perform at least one function application and data processing, for example, to perform the method provided by the embodiments of the present application.

FIG. 15 is a structural diagram of the base station according to an embodiment. As shown in FIG. 15, the base station includes a processor 60, a memory 61, and a communication interface 62. One or more processors 60 may be provided in the base station, and one processor 60 is used as an example in FIG. 15. The processor 60, the memory 61, and the communication interface 62 that are in the base station may be connected through a bus or in other manners. In FIG. 15, the connection through a bus is used as an example. The bus represents one or more of several types of bus structures, including a memory bus or a memory controller, a peripheral bus, an Accelerated Graphics Port, a processor, and a local bus using any bus structure among multiple bus structures.

As a computer-readable storage medium, the memory 61 may be configured to store software programs, computer-executable programs, and modules, such as program instructions/modules corresponding to the method of the embodiments of the present application. The processor 60 executes software programs, instructions, and modules stored in the memory 61 to perform at least one function application and data processing of the base station, that is, to perform the preceding method.

The memory 61 may include a program storage region and a data storage region. The program storage region may store an operating system and an application program required by at least one function. The data storage region may store data created depending on the use of a terminal. Additionally, the memory 61 may include a high-speed random-access memory and may further include a non-volatile memory such as at least one magnetic disk memory, a flash memory, or another non-volatile solid-state memory. In some examples, the memory 61 may include memories that are remotely disposed with respect to the processor 60. These remote memories may be connected to the base station via a network. Examples of the preceding network include, but are not limited to, the Internet, an intranet, a network, a mobile communication network, and a combination thereof.

The communication interface 62 may be configured to receive and send data.

An embodiment of the present application provides a computer-readable storage medium. The computer-readable storage medium stores a computer program which, when executed by a processor, causes the processor to perform the method of any embodiment of the present application.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list): an electrical connection having one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any appropriate combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by using any appropriate medium including, but not limited to, a radio medium, a wire, an optical cable, radio frequency (RF), and the like, or any appropriate combination thereof.

Computer program codes for executing the operations of the present disclosure may be written in one or more programming languages or a combination of multiple programming languages. The programming languages include object-oriented programming languages (such as Java, Smalltalk, C++, Ruby and Go) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case relating to the remote computer, the remote computer may be connected to the user computer via any type of network (including a local area network (LAN) or a wide area network (WAN)) or may be connected to an external computer (for example, via the Internet through an Internet service provider).

It is to be understood by those skilled in the art that the term "user equipment" encompasses any appropriate type of wireless user device, such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type appropriate for the local technical environment and may be implemented using any appropriate data storage technology, such as, but not limited to, a read-only memory (ROM), a random-access memory (RAM), an optical storage apparatus and system (a digital versatile disc (DVD) or a compact disc (CD)), and the like. Computer-readable media may include non-transitory storage media. The data processor may be of any type appropriate for the local technical environment, for example, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A wake-up signal monitoring method, the method being applied to a first communication node and comprising:
determining a monitoring window;
monitoring a wake-up signal in the monitoring window; and
determining transmission of the first communication node according to a monitoring result of the wake-up signal.

2. The method according to claim 1, wherein determining the monitoring window comprises at least one of the following:
determining a time domain start location of the monitoring window or a time domain end location of the monitoring window according to at least a first time domain location;
determining a time domain start location of the monitoring window according to at least period information;
determining a time domain length of the monitoring window according to at least a search space of a control channel;
determining a time domain length of the monitoring window according to at least a first length or a first ratio;
determining at least one of a time domain start location of the monitoring window, a time domain end location of the monitoring window, a time domain length of the monitoring window, a number of monitoring windows, an interval between monitoring windows, or a frequency domain location of the monitoring window according to at least first signaling; or
determining a frequency domain location of the monitoring window according to at least a frequency domain location of a synchronization signal.

3. The method according to claim 2, wherein the first time domain location comprises at least one of the following: a paging occasion (PO) corresponding to the first communication node, a paging frame (PF) corresponding to the first communication node, a first PO in the PF corresponding to the first communication node, a PO configured through signaling, a predefined PO, a paging early indication (PEI) corresponding to the first communication node, a random access occasion (RO) corresponding to the first communication node, a synchronization/system information block (SSB), a primary synchronization signal (PSS), a secondary synchronization signal (SSS), a low-power synchronization signal (LP-SS), or a first sequence.

4. The method according to claim 2, wherein the period information comprises at least one of the following: a first period based on the first communication node, a second period based on a communication node group, a period of an SSB, a period of a PSS, a period of an SSS, or a period of an LP-SS.

5. The method according to claim 4, wherein the period information comprises the second period based on the communication node group, and the method further comprises:
determining the second period according to a node group index corresponding to the first communication node and a correspondence between the node group index and the second period.

6. The method according to claim 5, wherein the node group index is determined in any one of the following manners:
the node group index is determined according to a group index indicated by a core network (CN);
the node group index is determined by calculating an identity (ID) of the first communication node modulo x, wherein x is a number of communication node groups;
POs in a discontinuous reception (DRX) cycle are divided into x groups, and the node group index is determined according to an index of a PO group in which a PO corresponding to the first communication node is located, wherein x is a number of communication node groups; or
the node group index is determined according to signaling.

7. The method according to claim 2, wherein the first signaling is signaling carried by an LP-SS, signaling carried by a low-power wake-up signal (LP-WUS), or higher-layer signaling.

8. The method according to claim 2, wherein the control channel comprises at least one of the following: a physical downlink control channel (PDCCH) or a PEI PDCCH.

9. The method according to claim 2, wherein the first length or the first ratio is a predefined value, or a value configured through higher-layer signaling, or a value determined according to at least a time domain length corresponding to the wake-up signal, or a value determined according to at least an extreme value of the time domain length corresponding to the wake-up signal, or a value determined according to at least a search space length corresponding to the wake-up signal.

10. The method according to claim 1, wherein determining the transmission of the first communication node according to the monitoring result of the wake-up signal comprises:
in response to the wake-up signal being monitored in the monitoring window, monitoring, by the first communication node, a PDCCH, or sending, by the first communication node, a physical random access channel (PRACH); or
in response to the wake-up signal being monitored in the monitoring window, determining, according to wake-up information carried in the wake-up signal, whether to monitor a PDCCH or send a PRACH; or
in response to the wake-up signal being monitored in the monitoring window, determining at least one of a time domain start location of a subsequent monitoring window, a time domain end location of the subsequent monitoring window, a time domain length of the subsequent monitoring window, a number of monitoring windows, an interval between monitoring windows, or a frequency domain location of the subsequent monitoring window according to second signaling carried in the wake-up signal; or
in response to the wake-up signal being monitored in the monitoring window, determining, according to third signaling carried in the wake-up signal, a location of an LP-SS to be subsequently monitored or a location of a first sequence to be subsequently monitored, wherein the third signaling is used for determining at least one of a period, a time domain offset, a frequency domain offset, or a time domain location corresponding to the LP-SS or the first sequence.

11. The method according to claim 1, further comprising at least one of the following:
monitoring, by the first communication node, the wake-up signal constantly before fourth signaling is received, and monitoring, by the first communication node, the wake-up signal only in the monitoring window after the fourth signaling is received, wherein the fourth signaling is at least one of higher-layer signaling, signaling carried by an LP-SS, or signaling carried by a first sequence; or
monitoring, by the first communication node, the wake-up signal constantly within a first interval, and monitoring, by the first communication node, the wake-up signal in the monitoring window within a second interval, wherein the first interval and the second interval are predefined time periods or time periods configured through signaling, or the first communication node corresponds to different radio resource control (RRC) states within the first interval and the second interval.

12. A wake-up signal sending method, the method being applied to a second communication node and comprising:
determining a monitoring window; and
sending a wake-up signal in the monitoring window.

13. The method according to claim 12, wherein determining the monitoring window comprises at least one of the following:
determining a time domain start location of the monitoring window or a time domain end location of the monitoring window according to at least a first time domain location;
determining a time domain start location of the monitoring window according to at least period information;
determining a time domain length of the monitoring window according to at least a search space of a control channel;
determining a time domain length of the monitoring window according to at least a first length or a first ratio;
determining at least one of a time domain start location of the monitoring window, a time domain end location of the monitoring window, a time domain length of the monitoring window, a number of monitoring windows, an interval between monitoring windows, or a frequency domain location of the monitoring window according to at least first signaling; or
determining a frequency domain location of the monitoring window according to at least a frequency domain location of a synchronization signal.

14. The method according to claim 13, wherein the first time domain location comprises at least one of the following: a paging occasion (PO) corresponding to a first communication node, a paging frame (PF) corresponding to the first communication node, a first PO in the PF corresponding to the first communication node, a PO configured through signaling, a predefined PO, a paging early indication (PEI) corresponding to the first communication node, a random access occasion (RO) corresponding to the first communication node, a time domain location of a sent synchronization/system information block (SSB), a time domain location of a sent primary synchronization signal (PSS), a time domain location of a sent secondary synchronization signal (SSS), a time domain location of a sent low-power synchronization signal (LP-SS), or a time domain location of a sent first sequence.

15. The method according to claim 13, wherein the period information comprises at least one of the following: a first period configured based on a first communication node, a second period configured based on a communication node group, a period of a sent SSB, a period of a sent PSS, a period of a sent SSS, or a period of a sent LP-SS.

16. The method according to claim 13, wherein the control channel comprises at least one of the following: a physical downlink control channel (PDCCH) corresponding to a first communication node or a PEI PDCCH corresponding to the first communication node.

17. The method according to claim 13, wherein the first length or the first ratio is a predefined value, or a value configured through higher-layer signaling, or a value determined according to at least a time domain length corresponding to the wake-up signal, or a value determined according to at least an extreme value of the time domain length corresponding to the wake-up signal, or a value determined according to at least a search space length corresponding to the wake-up signal.

18. The method according to claim 13, wherein the first signaling is signaling carried by an LP-SS, signaling carried by a low-power wake-up signal (LP-WUS), or higher-layer signaling.

19. The method according to claim 12, further comprising at least one of the following:
sending, by the second communication node, the wake-up signal in the monitoring window after fifth signaling is sent, wherein the fifth signaling is at least one of higher-layer signaling, signaling carried by a first sequence, or signaling carried by an LP-SS; or
sending, by the second communication node, the wake-up signal in the monitoring window within a third interval, wherein the third interval is a predefined time period or a time period configured through signaling, or a radio resource control (RRC) state corresponding to a first communication node within the third interval is a preset state.

20. A first communication node, comprising a processor configured to perform the wake-up signal monitoring method according to any one of claims 1 to 11 when executing a computer program.

21. A second communication node, comprising a processor configured to perform the wake-up signal sending method according to any one of claims 12 to 19 when executing a computer program.

22. A computer-readable storage medium storing a computer program which, when executed by a processor, causes the processor to perform the wake-up signal monitoring method according to any one of claims 1 to 11 or the wake-up signal sending method according to any one of claims 12 to 19.
